# EUROPEAN PATENT SPECIFICATION

(11) **EP 2 114 109 B1**
(45) Date of publication and mention of the grant of the patent: **20.03.2013**
(21) Application number: 08008093.0
(22) Date of filing: 28.04.2008
(51) Int. Cl.: H04W 88/08, H04W 88/02

(54) **Picocell base station for wireless telecommunications**
Picozellenbasisstation für drahtlose Telekommunikation
Station de base de piocellule pour télécommunications sans fil

(43) Date of publication of application: 04.11.2009
(73) Proprietor: Alcatel Lucent, 75007 Paris (FR)
(72) Inventor: Ng, Man Hung, Swindon SN25 2JS Wiltshire (GB)
(74) Representative: Sarup, David Alexander

(56) References cited:
- US-A1- 2007 054 668
- US-A1- 2007 123 256

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term picocells generically for cells that are smaller than macrocells. One way to establish a picocell is to provide a picocell base station that operates within a relatively limited range within the coverage area of a macrocell. One example of use of a picocell base station is to provide wireless communication coverage within a building.

The picocell base station is of a relatively low transmit power and hence each picocell is small compared to a macrocell.

Picocell base stations can use broadband Internet Protocol connections as "backhaul", in other words they are connected, for example, via picocell base station gateways to a Universal Mobile Telecommunications System (UMTS) core network.

Picocell base stations are intended primarily for users belonging to a particular home or office. Picocell base stations may be private access or public access. In private access picocell base stations, access is restricted only to registered users, for example family members or particular groups of employees. In public access picocell base stations, other users may also use the picocell base station, subject to certain restrictions to protect the Quality of Service received by registered users.

There can be a large number of picocells within an area roughly equivalent to the size of a macrocell. Picocells are usually deployed by end-users or unskilled individuals installing picocell base stations where they choose in their offices and homes, for example in what is sometimes called a "plug-and-play" manner.

A problem with private access picocell base stations is that user terminals that are not in the group of registered users but are currently located near to the picocell base station cannot get any service. This is because such a user terminal is not permitted to connect to the picocell base station, but due to interference from the picocell base station, connection to the macrocell base station is not possible. Several techniques are known, such a power control, that seek to address this problem but have disadvantages as coverage can be affected.

Private access picocell base stations need to occasionally allow connection to unregistered user terminals, for example in emergency call situations.

United States Patent Publications US2007/0054668 and US2007/0123256 provide background. It is known from US2007/0054668 to provide a picocell base station comprising a memory and a switch;

the memory storing identifiers of registered user terminals;

the switch being configured to enable selection between a first mode of operation in which non-emergency call connections by radio are only permitted to registered user terminals, and a second mode of operation in which a non-emergency call connection by radio to an unregistered user terminal is permitted.

### Summary of the Invention

The present invention is characterised over the disclosure of in that the picocell base station further comprises an indicator operative to indicate to a human observer whether or not the picocell base station is in the first mode of operation with no emergency call connection to an unregistered user.

The switch can be a manual switch, such as an external switch. Alternatively, the switch can be internal, such as set by remote control, for example infra-red signal control.

The maximum number of unregistered users that can be call-connectcd in the second mode of operation can be selected, for example by being pre-set by the picocell base station owner.

### Brief Description of the Drawings

An embodiment of the present invention will now be described by way of example and with reference to the drawings, in which:
Figure 1 is a diagram illustrating a wireless communications network according to an alternative proposal,
Figure 2 is a diagram illustrating a picocell base station shown in Figure 1 including a manual switch, and
Figure 3 is a diagram illustrating a picocell base station according to an embodiment including a manual switch and an indicator light.

### Detailed Description

When considering a known system, the inventor(s) realised that it would be advantageous to allow the owner of a picocell base station to be able to select whether or not to, in essence, allow unregistered users to use the picocell base station; in other words transfer between public access and private access modes of operation.

### The Network

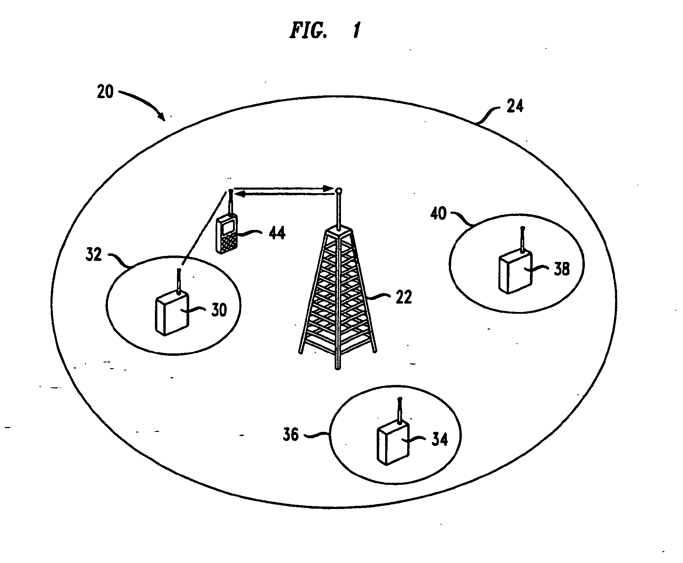

As shown in Figure 1, in one communication network 20, there are two types of base stations (often denoted BS or BSs) : macrocell base stations and picocell base stations. One macrocell base station 22 for wireless telecommunications is shown for simplicity in Figure 1. The macrocell base station has a radio coverage area 24 that is often referred to as a macrocell. The geographic extent of the macrocell 24 depends on the capabilities of the macrocell base station 22 and the surrounding geography.

Within the macrocell 24, a picocell base station (also known as a picocell base station unit, PCBSU) 30 provides wireless communications within a picocell 32. A picocell is a radio coverage area. The radio coverage area of the picocell 30 is much less than that of the macrocell 24. For example, the picocell 32 corresponds in size to a user's home.

Another picocell base station unit (PCBSU) 34 provides wireless coverage within a picocell 36. A further picocell 38 provides wireless coverage within a picocell 40.

It is possible for a mobile terminal 44 within the macrocell 24 to communicate with the macrocell base station 22 in known manner. When the mobile terminal 44 enters into a picocell 32 for which the mobile terminal is registered for communications within the picocell base station 30, it is desirable to handover the connection with the mobile terminal from the macrocell to the picocell. In the example shown in Figure 1, the user of mobile terminal 44 is a preferred user to use the picocell 32.

In this example, the PCBSUs 30,34,38 and macrocell base station 22 are connected via broadband Internet Protocol connections ("backhaul") to an area code controller (ACC) of a UMTS core network.

### Picocell Base Station

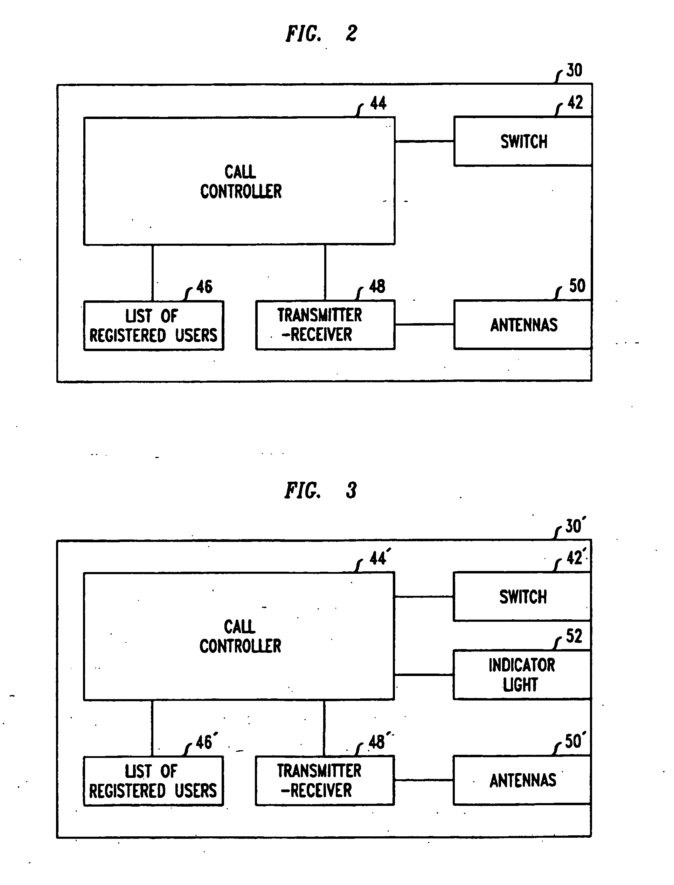

As shown in Figure 2, the picocell base station 30 includes a manual switch 42 connected to a call controller 44 that is connected to a memory 46 that stores a list of registered user terminals, for example those of family members or recognised office employees. The call controller 44 is also connected to a transmitter-receiver 48 that is connected to an antenna 50.

The switch 42 is usable to select between two modes of operation of the call controller 44. In one of the modes of operation, non-emergency call connections (via the transmitter-receiver 48 and antenna 50) are permitted only with user terminals on the list of registered users. In the other of the modes of operation, the picocell base station 30 grants access to any user terminal requesting call connection, for example by means of a handover request, irrespective of whether or not they are on the list of registered user terminals. This is, of course, subject to the usual resource constraints for example, radio bandwidth, that provide an effective maximum to the number of call connections to user terminals that can be handled by one picocell base station. It is also subject to the requirement that emergency calls from any user terminal can be handled by the PCBSU, specifically even if the user terminal is not on the list of registered users for that PCBSU.

### Variant with Indicator Light

As shown in Figure 3, in a basically similar picocell base station 30' to that shown in Figure 2 and described above, additionally, there is an indicator light 52 connected to a call controller 44'.

In the picocell base station shown in Figure 3, similarly to the picocell base station shown in Figure 2, a switch 42' is connected to a call controller 44' that is connected to a memory 46' and transmitter-receiver 48'. The transmitter-receiver 48' is connected to an antenna 50'.

The indicator light 52 indicates to the human observer, such as the owner of the picocell base station 30', basically whether or not the picocell base station is in private access mode. This is useful information because it is the owner of the picocell base station 30' who is charged for the radio resources and "backhaul" resources that are used by all users of the picocell base station.

The indicator light provides information to the owner in selecting between public access and private access modes of operation as to which mode has been selected. Knowing which mode is indicated by the indicator light 52, the owner can switch the switch 42' to make his/her desired selection.

The indicator light 52 gives out different colours: green light when registered users only have access ("private access") and there is no emergency call from an unregistered user terminal, and a red (warning) light when the picocell base station is in public access mode or is handling an emergency call from an unregistered user terminal. In other words, in this example, the indicator light is red both in the situation that an unregistered user terminal is actively accessing the picocell base station 30' for example when making an emergency call, and the situation that no unregistered user terminal is actively accessing the picocell base station but an unregistered user terminal may do so. The group of registered users is defined by the owner, for example upon picocell base station set-up.

### Some Other Variants

In some otherwise similar embodiments, different types of indicator than a red/green light may be used. For example, a light emitting diode (LED) may be provided instead that displays different words, for example, "Open" when in public access mode but "Closed" otherwise. In another example, a different colour of light, such as yellow light, is used to indicate the situation that an unregistered user terminal is in a call connection to the picocell base station.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A picocell base station (30) comprising a memory (46') and a switch (42');
the memory storing identifiers of registered user terminals;
the switch (42) being configured to enable selection between a first mode of operation in which non-emergency call connections by radio are only permitted to registered user terminals, and a second mode of operation in which a non-emergency call connection by radio to an unregistered user terminal is permitted; **characterised in that** the picocell base station further comprises an indicator (52) operative to indicate to a human observer whether or not the picocell base station is in the first mode of operation with no emergency call connection to an unregistered user.

2. A picocell base station according to claim 1 in which the picocell base station further comprises a call controller having said two modes of operation.

3. A picocell base station according to claim 1, in which the switch is a manual switch.

4. A picocell base station according to claim 1, in which the switch is an external switch.

5. A picocell base station according to claim 1, in which the picocell base station has a body and the switch is internal to said body.

6. A picocell base station according to claim 5, in which the switch is controlled by remote control.

7. A picocell base station according to claim 1, in which the maximum number of unregistered users that can be call-connected in the second mode of operation to the picocell base station is selectable.

8. A picocell base station according to claim 1, in which the indicator comprises an indicator light.

9. A picocell base station according to claim 8, in which the picocell base station comprises a body, and the indicator light is mounted on the body so as to be observable from the outside.

## Patentansprüche

1. Picozellen-Basisstation (30) mit einem Speicher (46') und einem Switch (42');
wobei der Speicher Kennungen von registrierten Benutzerendgeräten abspeichert;
wobei der Switch (42') dafür konfiguriert ist, eine Auswahl zwischen einer ersten Betriebsart, in welcher Rufverbindungen, die keine Notrufverbindungen sind, über Funk lediglich für registrierte Benutzerendgeräte zulässig sind, und einer zweiten Betriebsart, in welcher eine Rufverbindung, die keine Notrufverbindung ist, über Funk zu einem nicht registrierten Benutzerendgerät zulässig ist, zu ermöglichen; **dadurch gekennzeichnet, dass** die Picozllen-Basisstation weiterhin einen Indikator (52) umfasst, welcher funktionsfähig ist, um einem menschlichen Beobachter anzuzeigen, ob sich die Picozellen-Basisstation in der ersten Betriebsart ohne Notrufverbindung zu einem nicht registrierten Benutzer befindet oder nicht.

2. Picozellen-Basisstation nach Anspruch 1, wobei die Picozellen-Basisstation weiterhin einen Call-Controller mit den besagten zwei Betriebsarten umfasst.

3. Picozellen-Basisstation nach Anspruch 1, wobei der Switch ein manueller Switch ist.

4. Picozellen-Basisstation nach Anspruch 1, wobei der Switch ein externer Switch ist.

5. Picozellen-Basisstation nach Anspruch 1, wobei die Picozellen-Basisstation ein Gehäuse aufweist und der Switch in dem besagten Gehäuse angeordnet ist.

6. Picozellen-Basisstation nach Anspruch 5, wobei der Switch über eine Fernbedienung gesteuert wird.

7. Picozellen-Basisstation nach Anspruch 1, wobei die maximale Anzahl von nicht registrierten Benutzern, die in der zweiten Betriebsart mit der Picozellen-Basisstation werden können, wählbar ist.

8. Picozellen-Basisstation nach Anspruch 1, wobei der Indikator eine Anzeigeleuchte umfasst.

9. Picozellen-Basisstation nach Anspruch 8, wobei die Picozellen-Basisstation ein Gehäuse umfasst und die Anzeigeleuchte derart am Gehäuse montiert ist, dass sie von außen sichtbar ist.

## Revendications

1. Station de base de picocellule (30) comprenant une mémoire (46') et un commutateur (42') ;
la mémoire stockant les identifiants des terminaux d'utilisateur enregistrés ;
le commutateur (42') étant configuré pour permettre la sélection entre un premier mode de fonctionnement dans lequel les liaisons de communication par radio qui ne sont pas des appels d'urgence sont seulement autorisées vers les terminaux d'utilisateur enregistrés, et un deuxième mode de fonctionnement dans lequel une liaison de communication par radio qui n'est pas un appel d'urgence est autorisée vers un terminal d'utilisateur non enregistré ; **caractérisée en ce que** la station de base de picocellule comprend en outre un indicateur (52) pouvant être utilisé pour indiquer à un observateur humain si la station de base de picocellule se trouve ou non dans le premier mode de fonctionnement sans possibilité d'appel d'urgence vers un utilisateur non enregistré

2. Station de base de picocellule selon la revendication 1, avec laquelle la station de base de picocellule comprend en outre un contrôleur qui possède lesdits deux modes de fonctionnement.

3. Station de base de picocellule selon la revendication 1, avec laquelle le commutateur est un commutateur manuel.

4. Station de base de picocellule selon la revendication 1, avec laquelle le commutateur est un commutateur externe.

5. Station de base de picocellule selon la revendication 1, avec laquelle la station de base de picocellule comprend un corps et le commutateur est à l'intérieur dudit corps.

6. Station de base de picocellule selon la revendication 5, avec laquelle le commutateur est commande par télécommande.

7. Station de base de picocellule selon la revendication 1, avec laquelle le nombre maximum d'utilisateurs non enregistrés qui peuvent être joints par un appel dans le deuxième mode de fonctionnement de la station de base de picocellule est sélectionnable.

8. Station de base de picocellule selon la revendication 1, avec laquelle l'indicateur comprend un témoin lumineux.

9. Station de base de picocellule selon la revendication 8, avec laquelle la station de base de picocellule comprend un corps et le témoin lumineux est monté sur le corps de manière à pouvoir être observé depuis l'extérieur.
